# FASCICULE DE BREVET EUROPEEN

(11) **EP 3 987 204 B1**
(45) Date de publication et mention de la délivrance du brevet: **24.07.2024**
(21) Numéro de dépôt: 20785785.5
(22) Date de dépôt: 19.06.2020
(51) Int. Cl.: F25B 41/35, F16K 31/04, F16K 37/00, F16K 31/50, F16K 31/53

(54) **VANNE DE RÉGLAGE COMPACTE**
KOMPAKTES STEUERVENTIL
COMPACT CONTROL VALVE

(30) Priorité: 20.06.2019 FR 1906660
(43) Date de publication de la demande: 27.04.2022
(73) Titulaire: Moving Magnet Technologies, 25000 Besançon (FR)
(72) Inventeur: BILLET, Lionel, 25410 Dannemarie sur Crète (FR)
(74) Mandataire: IP Trust
(86) Numéro de dépôt international: PCT/FR2020/051072
(87) Numéro de publication internationale: WO 2020/254772

(56) Documents cités:
- EP-A1- 2 676 027
- WO-A1-2018/126214
- WO-A1-2018/180041
- WO-A1-2019/110923
- CN-A- 106 763 813
- DE-A1- 102017 107 688
- DE-U1- 29 616 690
- KR-A- 20160 071 147
- US-A- 4 901 977
- US-B1- 6 460 567

## Description

### DOMAINE TECHNIQUE DE L'INVENTION

L'invention se rapporte à une vanne de réglage compacte destinée à réguler la circulation d'un fluide, liquide ou gazeux, par exemple en tant que dispositif détendeur pour circuit de climatisation et dont l'actionnement est réalisé par un moteur électrique sans balai.

La présente invention se destine de manière privilégiée, mais non limitative, au domaine des vannes de réglage de débit pour circuit de climatisation ou de refroidissement de batteries. La particularité de ces systèmes est le besoin de maintenir le fluide caloporteur dans un circuit étanche. La solution généralement adoptée, assurant cette étanchéité tout en permettant un actionnement pérenne, est de séparer la partie fixe, non immergée dans le fluide, d'un moteur électrique sans balai ou d'un solénoïde, généralement le stator du moteur, d'un élément mobile se déplaçant dans le circuit de fluide, la séparation étant réalisée par un élément amagnétique étanche. Le réglage des débits est alors possible sans porter atteinte à l'étanchéité du circuit de réfrigération. Il est demandé à ces systèmes de régulation une grande compacité, une efficience énergétique, une grande précision de commande, et une adaptabilité aux différentes configurations mécaniques du circuit de fluide.

Par ailleurs, dans le cadre d'utilisation de ces vannes, parce que les pointeaux peuvent avoir des sections importantes (typiquement supérieures à 25 mm²) et sous des pressions pouvant dépasser les 15 MPa, les dispositifs de réglage doivent développer des efforts supérieurs à 300 N, voire supérieurs à 400 N.

### ETAT DE LA TECHNIQUE ANTERIEURE

Afin de réaliser de tels efforts dans des vannes de réglage utilisant des pointeaux, on connait dans l'état de la technique le document EP2725267 qui présente un motoréducteur utilisant un moteur relié au pointeau grâce à un dispositif réducteur sous la forme d'engrenages droits, entrainant en rotation une vis suivant une ligne parallèle mais non concourante au moteur. La composante linéaire du mouvement hélicoïdal est ainsi utilisée pour déplacer linéairement le pointeau. Cette solution est très peu compacte axialement et utilise un moteur dont on doit assurer l'étanchéité statique en isolant les fils électriques du fluide dans lequel baigne le moteur. Il en résulte une complexité industrielle.

On connait également le document US20060180780 qui propose un motoréducteur plus compact et qui intègre, à l'intérieur d'une cloche d'étanchéité, un rotor de moteur à flux axial ainsi qu'un réducteur mécanique de mouvement sous la forme d'un train épicycloïdal. Le réducteur est logé à l'intérieur du rotor de moteur, assurant une certaine compacité et, par rapport au document précédent, évite l'utilisation d'une connectique de moteur étanchéifiée, l'étanchéité se faisant par la cloche englobant rotor et train réducteur.

On connaît aussi le brevet US6460567 décrivant une vanne qui comprend un corps avec des passages d'entrée et de sortie, un élément de fermeture disposé entre ces passages, un siège de vanne situé dans le corps, un induit de moteur, un organe d'entraînement de l'élément de fermeture, l'induit ayant plusieurs aimants permanents espacés étant renfermé dans une enceinte perméable magnétiquement, fermée à une extrémité et scellée hermétiquement, à son autre extrémité, sur le corps de vanne, et un stator situé à l'extérieur de l'enceinte et comprenant des enroulements d'entraînement et des dispositifs à effet Hall.

Le brevet coréen KR20160071147 décrit un autre exemple de vanne, destiné à un dispositif de vanne EGR qyu comprend : un moteur ; un élément rotatif monté sur le moteur pour tourner ; un arbre de vis-mère muni d'une plaque de soupape et monté sur l'élément rotatif par une vis-mère pour se déplacer dans une direction verticale en réponse à la rotation de l'élément rotatif ; et un élément de prévention de rotation monté sur l'arbre de la vis-mère. Le moteur est disposé dans une direction perpendiculaire à un axe central de l'élément rotatif.

La demande de brevet WO2019/110923 concerne une vanne de réglage de circulation d'un fluide présentant un corps de vanne et un boitier contenant un moteur électrique composé d'un stator et d'un rotor, un pointeau, une cloche d'étanchéité ainsi qu' 'une vis fixe ou un écrou fixe, ledit vis fixe ou ledit écrou fixe étant solidaire du corps de vanne, le stator étant solidaire du corps de vanne par l'intermédiaire prétendu boitier, la cloche d'étanchéité étant posée à l'interface entre le rotor et le stator de manière à ce que la vis/écrou, le rotor et le pointeau soient à l'intérieur de cette cloche et immergés dans ledit fluide, le stator étant isolé dudit fluide, le rotor ayant la fonction d'un écrou ou d'une vis et ayant un mouvement hélicoïdal imposé par ledit vis fixe ou ledit écrou fixe et entraînant le pointeau axialement caractérisé en ce que le moteur est un moteur polyphasé sans balai à flux magnétique principal radial.

La demande de brevet WO2018/180041 concerne une vanne actionnée électriquement selon l'invention comprend : un corps de vanne ; un dispositif d'entraînement pour déplacer le corps de vanne le long d'un premier ax ; un arbre rotatif pour faire tourner le dispositif d'entraînement autour du premier axe ; un élément à aimant permanent ; un capteur d'angle ; et une culasse qui recouvre une partie d'un aimant permanent ou une partie du capteur d'angle.

La demande de brevet DE29616690 concerne un autre exemple de vanne de dosage de fluide.

La demande de brevet WO2018/126214 des soupapes actionnées magnétiquement peuvent comprendre un actionneur de soupape magnétique à couple asymétrique efficace pour générer une première quantité de couple lorsqu'elle est disposée selon une première orientation et une seconde quantité de couple lorsqu'elle est disposée selon une seconde orientation.

La demande de brevet DE102017105688 concerne un commutateur rotatif qui assure la commande d'un dispositif frein de stationnement d'un véhicule, notamment d'un véhicule utilitaire, comprenant un bouton rotatif et un pendant (du bouton rotatif, le bouton rotatif et son pendant pouvant tourner, l'un par rapport à l'autre, autour d'un axe de rotation.

La demande de brevet US4901977 concerne une vanne caractérisée en ce qu'elle comprend : un corps de vanne comportant un orifice d'entrée et un orifice de sortie séparés par une cavité intérieure; un noyau tournant allongé s'étendant sur une partie importante de la longueur de la cavité et comportant un passage de fluide longitudinal pour conduire le fluide provenant de l'orifice d'entrée du corps de vanne; des moyens d'engrenage portés par le noyau pour le faire tourner autour d'un axe dirigé suivant la longueur de la cavité intérieure du corps de vanne; un disque amont fixé à l'extrémité aval du noyau pour constituer un ensemble, ce disque amont comportant un passage de fluide pour conduire le fluide provenant du passage du noyau; un disque aval supporté par le corps de vanne en regard et contre le disque amont, ce disque aval comportant un passage de fluide pour conduire le fluide provenant du passage de fluide du disque amont; et des moyens d'entraînement comprenant des dents d'engrenage venant en prise avec les moyens d'engrenage du noyau pour le faire tourner avec le disque amont, de façon que les passages de fluide du noyau et du disque amont puissent être amenés dans la position de transmission de fluide et hors de la position de transmission de fluide avec le passage de fluide du disque aval.

La demande de brevet EP2676027 décrit une vanne d'isolement comprenant un boîtier doté d'une voie de mise à l'air libre et d'un élément d'étanchéité qui ouvre et ferme la voie de mise à l'air libre. L'élément d'étanchéité est entraîné par un moteur par l'intermédiaire d'un engrenage qui relie l'élément d'étanchéité au moteur. Le moteur entraîne l'engrenage dans une première direction pour ouvrir la voie de mise à l'air libre et dans une deuxième direction pour fermer la voie de mise à l'air libre. En fonctionnement, le courant du moteur augmente lorsque le l'élément d'étanchéité atteint la première position et/ou la deuxième position.

La demande de brevet CN106763813 concerne un corps de la vanne et le boîtier installé dans l'extrémité supérieure du corps de la vanne, forme une cavité d'installation de l'ensemble de noyau entre le corps de la vanne et le boîtier.

### PROBLEMES DE LA TECHNIQUE ANTERIEURE

Cependant, dans cette solution précédente, le dimensionnement du moteur est intrinsèquement lié à celui du train réducteur et le peu de volume disponible généralement à l'intérieur d'un rotor de moteur, impose des pièces de petites tailles pour le réducteur de mouvement. Il en résulte des contraintes de fabrication et de tolérances de pièces très fortes rendant la solution peu économique, mais aussi de l'usure. De plus, cette difficulté de dimensionnement conjoint du moteur et du réducteur implique une faible variabilité du rapport de réduction, et au final de la force, qu'il est possible d'atteindre. Il en résulte un dimensionnement figé et peu flexible. La taille importante axiale résultante est aussi relativement importante du fait de l'empilement des différents éléments mécaniques en présence. Cet encombrement n'est pas toujours compatible avec les impératifs du système. Aussi, si l'on envisage d'intégrer un capteur de position, cet encombrement axial devient encore plus important et problématique. Enfin, dans le domaine des systèmes de climatisation, basés sur le dosage fin de volumes de fluides changeant de phase, il est requis une grande propreté du fluide et des réseaux transportant ce fluide. L'absence, ou la faible présence contrôlée en nombre et diamètre, de particules pouvant obturer ou empêcher la complète fermeture ou modifier les passages à l'intérieur du système est indispensable dès la fabrication de celui-ci. Il est également essentiel d'assurer l'absence de fuite de fluide au cours de la vie du système afin de garantir les performances et la fiabilité du système de refroidissement (climatisation, batteries...) et ne pas polluer l'environnement. Ces systèmes sont donc habituellement entièrement réalisés dans un environnement à la pollution et l'étanchéité contrôlée, ce qui génère des surcoûts.

### EXPOSE DE L'INVENTION

La présente invention vise à pallier les inconvénients de l'état de la technique en réalisant un actionneur plus compact axialement, plus flexible dans son dimensionnement, plus efficient et plus fiable que ceux de l'art antérieur et optimisant les coûts de production en série

Particulièrement, la présente invention se destine ainsi à proposer une solution flexible et compacte pouvant aussi bien être adaptée à développer de faibles efforts (typiquement 20 N) ou des efforts plus importants (typiquement 400 N) et ce dans un encombrement axial plus compact que celui proposé par l'état de l'art.

A cet effet, l'invention propose d'utiliser un engrenage gauche ou concourant afin de bénéficier d'un rapport de réduction important (typiquement pouvant aller de 1:10 à 1:40) et de générer une grande compacité axiale tout en gardant une cloche d'étanchéité simple qui évite toute étanchéité dynamique et toute étanchéité du connecteur. A titre d'exemples, les engrenages considérés sont les suivants : vis sans fin, conique, hypoïde. Les engrenages parallèles utilisés massivement dans les applications de vanne de régulation de fluide ne permettent pas d'atteindre des rapports de réduction élevés ou alors au prix d'un encombrement important ou d'une complexité accrue comme décrit plus haut.

Aussi, la présente invention permet de limiter les montages en environnement contrôlé au strict nécessaire, donc aux parties transportant le fluide et non aux parties statoriques liées au moteur électrique. L'ensemble des parties magnétiques du stator et l'électronique peuvent être réalisés mécaniquement et assemblés hors de la zone à pollution contrôlée, donc sans limitation de techniques. L'ensemble des guidages et des étanchéités étant réalisés par ces sous-ensembles, les éléments de réduction, de transformation de mouvement, les butées et les passages de fluide peuvent être assemblés et testé hors du corps de vanne, puis inséré en position finale. La partie statorique peut être assemblée après réalisation totale et test du circuit de fluide frigorigène. Cette dernière partie ne présente pas d'étanchéité vis-à-vis du fluide frigorigène.

L'invention réfère plus particulièrement à une vanne de réglage de circulation d'un fluide présentant un corps de vanne comprenant un organe mobile de réglage, un actionneur électrique comprenant un stator et un rotor, une cloche d'étanchéité s'étendant depuis le corps de vanne jusqu'à l'intérieur dudit stator, ladite cloche d'étanchéité étant positionnée à l'interface entre ledit rotor et ledit stator de manière à ce que ledit rotor soit à l'intérieur de ladite cloche et immergé dans ledit fluide, ledit rotor tournant autour d'un premier axe et étant solidaire d'un arbre s'étendant le long dudit premier axe, ledit organe mobile de réglage se déplaçant linéairement sur un deuxième axe ou en rotation autour dudit deuxième axe, ledit arbre présente une extrémité formant, avec une roue dentée entrainant ledit organe mobile de réglage, un engrenage gauche ou concourant, ledit arbre est guidé par uniquement deux paliers situés à ses extrémités.

L'invention concerne aussi un dispositif présentant les caractéristiques suivantes :
- ledit organe mobile de réglage est un pointeau se déplaçant linéairement.
- ledit deuxième axe est orthogonal audit premier axe dudit rotor et en ce que ladite extrémité est filetée et entraine une roue dentée tournant autour dudit deuxième axe.
- ladite extrémité est dentée et entraîne ladite roue dentée en formant un engrenage conique.
- ladite roue dentée entraine en rotation un moyeu, en ce que ledit moyeu est solidaire d'une vis, en ce qu'un écrou fixe est disposé en amont dudit moyeu imposant un mouvement hélicoïdal audit moyeu lors de la rotation de ladite roue dentée, et en ce que ledit moyeu est en contact avec ledit pointeau.
- ledit moyeu présente une extrémité sphérique appuyant sur ledit pointeau, et en ce qu'un ressort de compression maintient un contact constant entre ledit pointeau et ledit moyeu.
- ledit contact est glissant, supprimant la composante de rotation dudit pointeau.
- ledit deuxième axe et ledit deuxième axe sont tels que les plans orthogonaux auxdits axes ne sont pas orthogonaux entre eux.
- ledit organe mobile de réglage est sous la forme d'un boisseau se déplaçant en rotation autour dudit deuxième axe.
- la vanne présente un capteur de rotation dudit rotor composé d'une sonde magnétosensible solidaire d'un circuit imprimé à l'extérieur de ladite cloche, ainsi que d'au moins un élément magnétique solidaire dudit rotor à l'intérieur de ladite cloche et générant ledit champ magnétique.
- la vanne présente un capteur de position linéaire du pointeau composé d'une sonde magnétosensible, ainsi que d'au moins un élément magnétique solidaire dudit organe mobile de réglage et générant ledit champ magnétique.
- ledit stator dudit actionneur électrique présente uniquement trois bobines regroupées dans un secteur angulaire inférieur à 180°.
- ladite cloche est une cloche métallique disposée dans l'actionneur électrique.
- ladite cloche est une paroi de matière plastique entourant le stator de l'actionneur. Cette matière peut être une matière surmoulante ou non.
- ledit organe mobile de réglage se déplace en rotation autour dudit deuxième axe et ledit arbre est uniquement guidé par deux paliers situés à ses extrémités.
- le corps de vanne comporte deux cavités accueillant les éléments mobiles, lesdites cavités étant réalisées en deux usinages de révolution suivant deux axes distincts et pouvant comporter des sections cylindriques de différents diamètres.
- ledit stator ainsi que la carte électronique peuvent être assemblés au boitier, le tout pouvant être fixé sur le bloc de vanne étanche une fois toutes les opérations en environnement contrôlé achevées.

Un exemple concerne aussi un dispositif détendeur pour circuit de climatisation ou pour le refroidissement d'une batterie présentant un corps de vanne comprenant un organe mobile de réglage, un actionneur électrique comprenant un stator et un rotor, une cloche d'étanchéité s'étendant depuis le corps de vanne jusqu'à l'intérieur dudit stator, ladite cloche d'étanchéité étant positionnée à l'interface entre ledit rotor et ledit stator de manière à ce que ledit rotor soit à l'intérieur de ladite cloche et immergé dans ledit fluide, ledit stator étant isolé dudit fluide, ledit rotor tournant autour d'un premier axe et étant solidaire d'un arbre s'étendant le long dudit premier axe, ledit organe mobile de réglage se déplaçant linéairement sur un deuxième axe ou en rotation autour dudit deuxième axe, ledit arbre présente une extrémité formant, avec une roue dentée entrainant ledit organe mobile de réglage, un engrenage gauche ou concourant.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
[FIG.1] la figure 1, une vue en perspective d'une vanne selon l'invention dans un premier mode de réalisation de l'invention ;
[FIG.2] la figure 2, une vue de dessus et sans couvercle du dispositif de la figure 1 ;
[FIG.3] la figure 3, une vue en coupe transversale du dispositif de la figure 1 ;
[FIG.4] la figure 4, une vue en coupe longitudinale du dispositif de la figure 1 avec le pointeau permettant au fluide de circuler;
[FIG.5] la figure 5, une vue en coupe longitudinale ainsi qu'une vue isolée du dispositif de la figure 1 avec le pointeau fermant le circuit ;
[FIG.6] la figure 6, une vue en coupe longitudinale du dispositif auquel un capteur de déplacement du pointeau est associé ;
[FIG.7] la figure 7, une vue en perspective et en coupe partielle du dispositif de la figure 1 où le corps de vanne a été caché, permettant de voir la transformation de mouvement ;
[FIG.8] la figure 8, une vue en perspective d'un mode de réalisation alternatif où l'actionneur utilisé est à flux axial ;
[FIG.9] a figure 9, une variante de réalisation d'un dispositif de réglage de débit rotatif ;
[FIG.10] la figure 10, une autre variante de réalisation comprenant une réduction alternative par engrenage coniques ;
[FIG.11] la figure 11, une variante de réalisation comprenant une réduction où les axes d'actionneur et de pointeau sont non orthogonaux et non parallèle ;
[FIG.12] la figure 12, une variante de réalisation où la cloche d'étanchéité est réalisée par une paroi de matière entourant le stator de l'actionneur ;
[FIG.13] la figure 13, une variante de réalisation mettant en oeuvre un actionneur électrique de forme plate.

### DESCRIPTION DETAILLEE D'UN MODE DE REALISATION

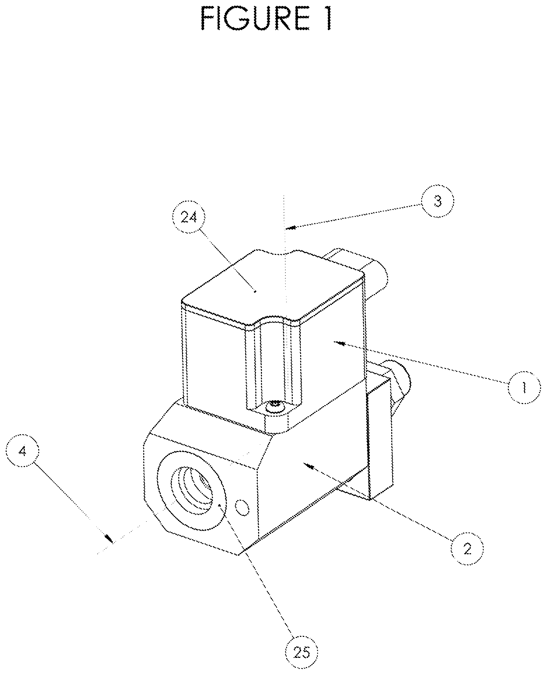

La figure 1 représente une vue isométrique d'un premier mode de réalisation d'une vanne selon l'invention, associant un ensemble d'actionnement électrique et un ensemble mécanique créant un chemin de circulation pour un fluide caloporteur. La vanne est ainsi plus particulièrement composée d'un actionneur électrique (1) qui met en rotation, grâce à rotor tournant autour de l'axe (3) de rotation, un arbre mécanique présentant un filet - non visible ici-. L'actionneur (1) est fixé sur le corps de vanne (2) qui comprend les canaux de passage (25) d'un fluide caloporteur dont le débit est géré par un pointeau. Le pointeau de la vanne, ici non représenté, ainsi que les éléments du réducteur autres que l'arbre mécanique lié au rotor, sont positionnés suivant un axe (4), non parallèle à l'axe (3). L'actionneur électrique (1) comprend un couvercle (24) sur la partie supérieure, et est fixé au corps de vanne (2). Suivant l'axe (4) du pointeau, la solution ici présentée est ainsi plus compacte que celles des documents de l'art antérieur.

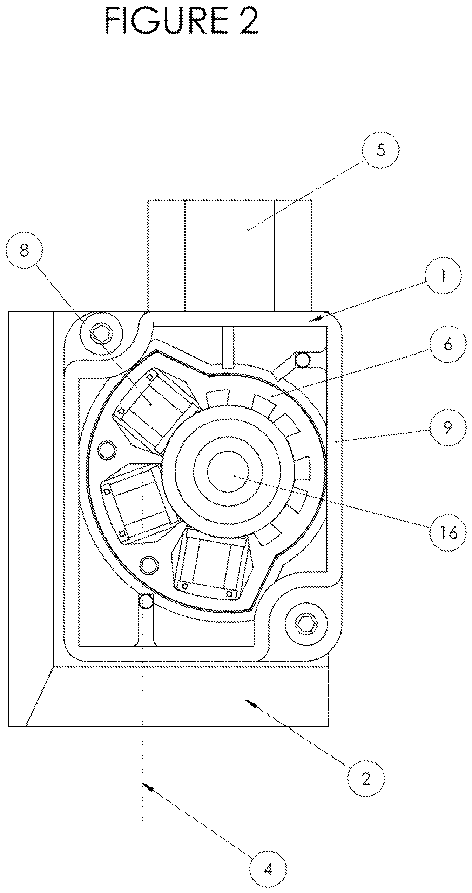

La figure 2 est une vue du dessus du premier mode de réalisation sans couvercle et permettant d'apprécier l'actionneur électrique (1) électrique à flux magnétique radial typiquement utilisé dans la présente invention. Cet actionneur électrique (1) n'est qu'un exemple non limitatif qu'il est possible d'utiliser. Il présente un stator (6) formé d'un paquet de tôles formant des dents sur lesquelles sont placées, pour certaines d'entre elles, des bobines électriques (8), ici 3 bobines à 60° mécaniques les unes des autres. La forme particulière du stator, ici présentant des bobines s'étendant approximativement à l'intérieur d'un secteur angulaire inférieur à 180°, permet de positionner le rotor éloigné du plan de symétrie de l'actionneur sans accroitre l'empreinte globale de l'actionneur électrique (1) sur le corps de vanne (2).

La liberté angulaire de positionnement des bobines permet l'orientation aisée de l'actionneur électrique (1), particulièrement de son connecteur (5), selon les besoins de l'ensemble du système dans lequel il s'intègre. L'actionneur électrique (1) est englobé par un boitier (9) qui peut être un logement dans lequel est placé ledit actionneur ou bien une matière plastique surmoulée. Dans cette vue sans couvercle (24), on apprécie aussi la présence d'une cloche d'étanchéité (16) à l'intérieur de laquelle est placé le rotor -non visible- de l'actionneur (1), cet élément étant immergé dans le fluide à réguler. A l'extérieur de cette cloche se trouvent, isolés du fluide, le stator (6) et les bobines (8). Comme on l'observe en trait coupé, l'axe (4) du pointeau est orthogonal à l'axe (3) du rotor, ces deux axes (3, 4) étant, dans cet exemple, non concourants.

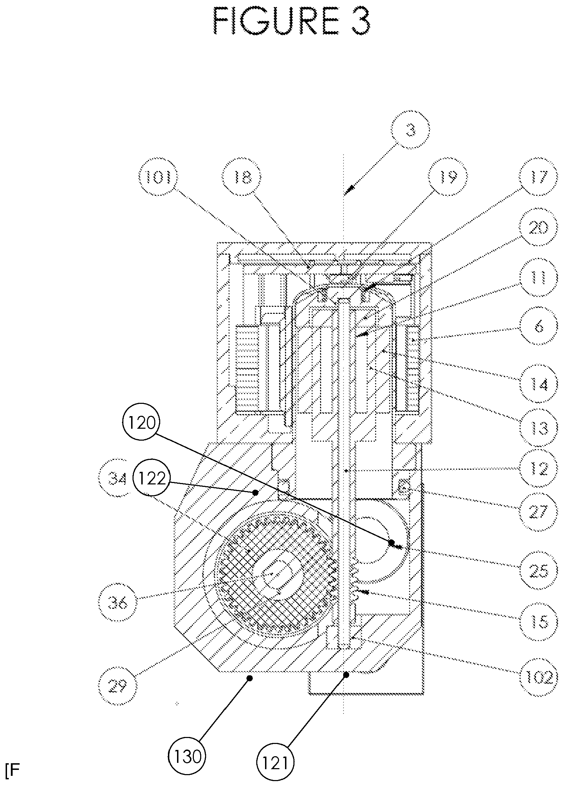

La figure 3 représente une coupe transversale d'une vanne selon ce premier mode de réalisation. Le corps de vanne (2) présente des canaux (25) de circulation d'entrée et de sortie de fluide. Le rotor (11) de l'actionneur électrique (1) est composé d'un arbre (12) et d'une partie moulée (13) qui forme ici, dans ce cas particulier de réalisation, un support pour des aimants permanents (14) coopérant magnétiquement avec le flux produit par les bobines électriques (8) du stator (6). La partie moulée (13) présente une extrémité (15) filetée, partie d'un réducteur mécanique de type vis sans fin. Le rotor (11), via l'extrémité (15) filetée met en rotation une roue dentée (34) tournant autour de l'axe (4) suivant un ratio proportionnel au nombre dents de la roue dentée (34) divisée par le nombre de filets. L'extrémité (15) filetée peut être également réalisée sur l'arbre (12) et n'est pas exclusivement réalisée par la partie moulée (13) si on imagine une variante de réalisation. La roue dentée (34) entraine un moyeu (36) qui présente une section avec deux méplats. Ces méplats, nullement limitatifs dans leur forme et leur nombre, permettent l'entrainement en rotation du moyeu (36) en coopération mécanique avec une contre forme (29) correspondantes au centre de la roue dentée (34).

Un ressort de compression (17), situé au-dessus du rotor (11), permet de positionner axialement le rotor et de maintenir le rotor (11) contraint axialement, générant une pré-charge rattrapant les jeux mécaniques. Cela permet audit rotor (11) de rester en position même si l'actionneur n'est pas alimenté électriquement et évite au rotor (11) d'osciller sous les vibrations par l'introduction d'un couple de friction induite par la poussée du ressort. Un élément magnétique (20) lié au rotor génère un champ magnétique qui peut être mesuré par une sonde magnétosensible (19) portée par un circuit imprimé (18), permettant ainsi de surveiller tout déplacement commandé ou non du rotor (11). Le circuit imprimé (18) ainsi que la sonde magnétosensible (19) sont positionnés à l'extérieur de la cloche (16) à l'abri du fluide.

La figure 3 illustre l'intérêt de ladite invention, permettant l'utilisation d'une cloche de diamètre légèrement supérieur au diamètre du rotor, et non dimensionné par la taille des éléments du réducteur. Cette cloche de petit diamètre présentera une meilleure résistance mécanique à épaisseur donnée en cas de pression élevée qu'une cloche de diamètre supérieur. Par ailleurs, on peut apprécier sur cette figure 3 un joint statique (27) de type torique, ce joint servant à éviter les fuites de fluide comprimé vers l'extérieur du dispositif. Il est à noter que l'invention ne nécessite pas de joint dynamique ni l'étanchéité des connectiques du moteur.

Dans ce mode de réalisation, l'arbre (12) est intégralement guidé à ses extrémités par des guidages (101, 102). Cette disposition, démunie de guidages centraux, facilite l'assemblage du rotor (11) avec les éléments de la réduction de mouvement. Ce mode de réalisation est particulièrement bien adapté à la production en série.

Enfin, la figure 3 montre la simplicité particulière de la réalisation du corps de vanne qu'il est possible de réaliser par un nombre limité d'usinage de révolution pour accueillir les éléments mobiles internes. Dans le mode de réalisation, présenté figure 3, seuls deux usinages de révolution sont réalisés, dans le corps de vanne, pour obtenir les cavités accueillant les sous-ensembles internes. Ainsi, un premier usinage de révolution selon l'axe (3) permet d'obtenir la cavité interne cylindrique (120) accueillant un sous-ensemble contenant le rotor (6) et sa cloche d'étanchéité. Ladite cavité interne cylindrique (120) dernière peut présenter des sections (121, 122) de diamètres différents mais peut être réalisée en une seule opération. De même un second usinage selon l'axe (4) permet d'obtenir la cavité cylindrique interne (130) accueillant un second sous-ensemble contenant les autres éléments du réducteur de mouvement ainsi que le dispositif de contrôle du débit. Lesdits sous-ensembles (120, 130) présentent préférentiellement des formes de révolution complémentaires aux formes du corps de vanne, les indexations angulaires ou linéaires requis lors du montage dans le système de vanne final sont donc réduits.

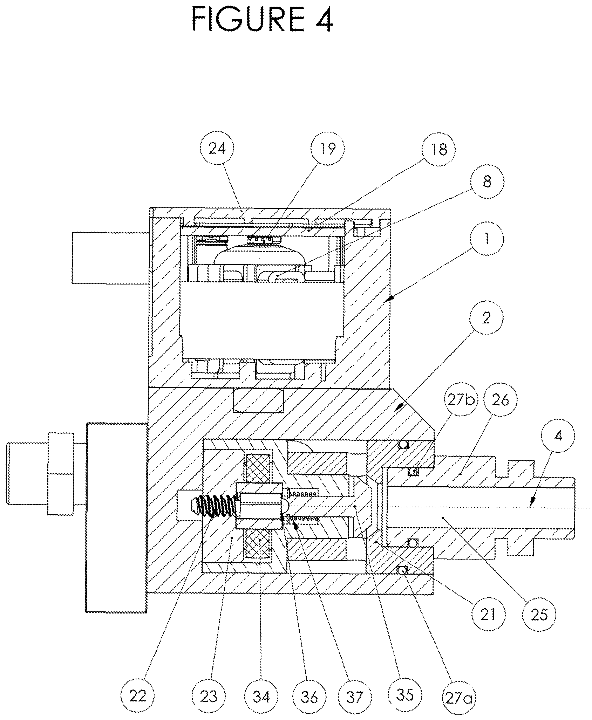

La figure 4 représente une coupe transversale d'une vanne selon ce premier mode de réalisation. Le corps de vanne (2) présente des canaux (25) de circulation d'entrée et de sortie de fluide caloporteur. Le passage de fluide est géré par le positionnement de l'extrémité du pointeau (35) géré par l'actionneur électrique (1), selon l'axe (4), afin de rapprocher ou d'éloigner cette extrémité de pointeau (35) du siège de pointeau (21). Une vis (22) est mise en rotation par la roue dentée (34) à l'aide du moyeu (36) présentant les deux méplats et génère un déplacement axial suivant (4) en s'appuyant sur la partie filetée conjuguée d'un écrou (23) fixe liée au corps de vanne (2) et situé en amont de la roue dentée (34) sur l'axe (4). Le moyeu (36) vient en appui sur le pointeau (35). Dans le cas illustré, mais de manière non limitative, l'appui est réalisé à l'aide d'une forme sphérique (28) à l'extrémité du moyeu (36) dans une forme complémentaire pour diminuer la sensibilité aux défauts d'entraxes des différents éléments. Un ressort (37) assure le contact du moyeu (36) avec le pointeau (35) même en absence de force sur ledit pointeau (35). Des canaux (non visibles) réalisés dans les pièces guidant le pointeau permettent le passage du fluide. La pièce réalisant le siège (21) du pointeau (35) peut présenter un logement destiné à recevoir les éléments de connexion (26) du fluide caloporteur, minimisant ainsi le nombre d'usinages nécessaires dans le corps de vanne (2). Des joints statiques (27a, 27b) réalisent l'étanchéité.

La sonde magnétosensible (19) est portée par un circuit imprimé (18) situé au-dessus de la cloche (16), sous le couvercle (24). Ce circuit imprimé (18) porte également les points de connexion aux bobines (8) de l'actionneur (1) ainsi que des composants électroniques nécessaires au pilotage du moteur électrique polyphasé.

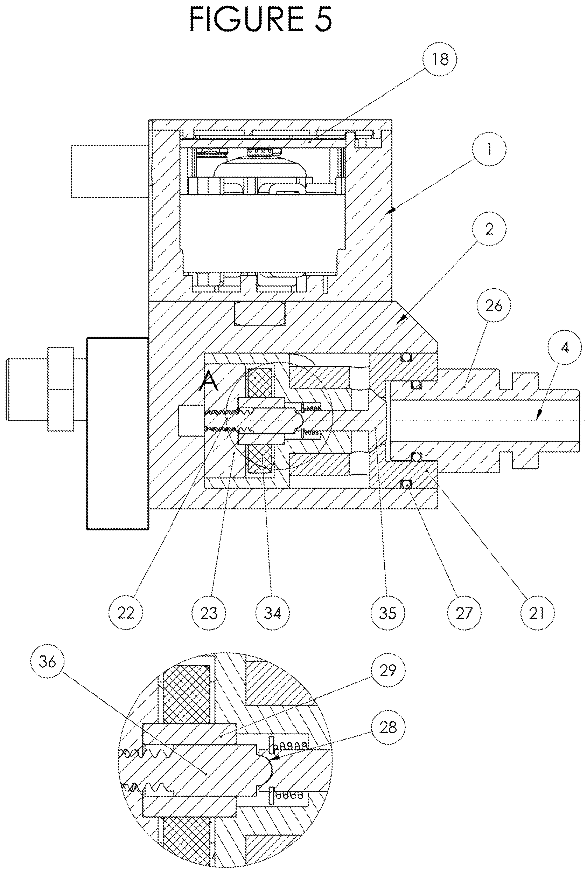

La figure 5 illustre ce même dispositif avec le pointeau (35) en position fermée. La vue isolée dans un cercle en bas est un agrandissement de la zone d'entrainement permettant d'apprécier le moyeu (36) qui est déplacé en rotation par la roue dentée (34) et qui glisse linéairement à l'intérieur de cette dernière par le mouvement hélicoïdal imposé par la vis (22). Elle permet aussi de mieux voir la forme sphérique (28) en appui sur le pointeau (35) qui permet de ne conserver que le mouvement linéaire au niveau du pointeau (35) en permettant le glissement en rotation de la forme sphérique (28) sur la tête du pointeau (35).

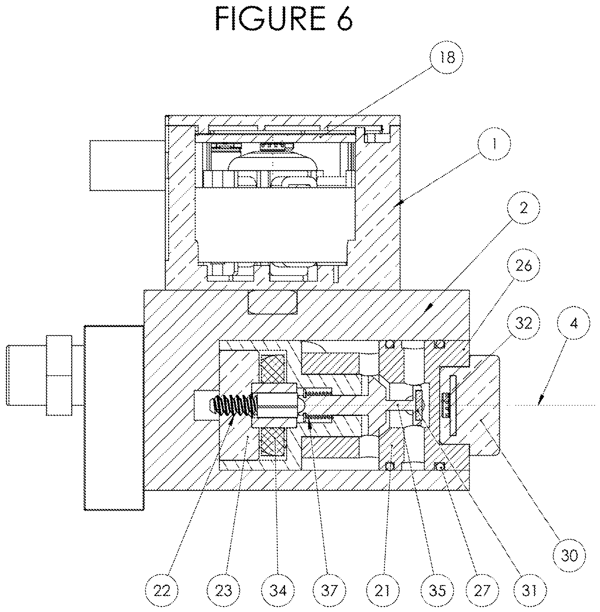

La figure 6 illustre ce même dispositif où le pointeau (35) est en position ouvert et sur lequel a été ajouté un élément magnétique (31) permettant à un support (30) équipé d'une sonde magnétosensible (32) d'acquérir la position linéaire du pointeau (35). Par rapport à la solution de détection en vis-à-vis du rotor décrite précédemment, cette configuration permet de s'affranchir des jeux mécaniques inhérents au système de transformation mécanique de mouvement et de déterminer la position réelle du pointeau (35).

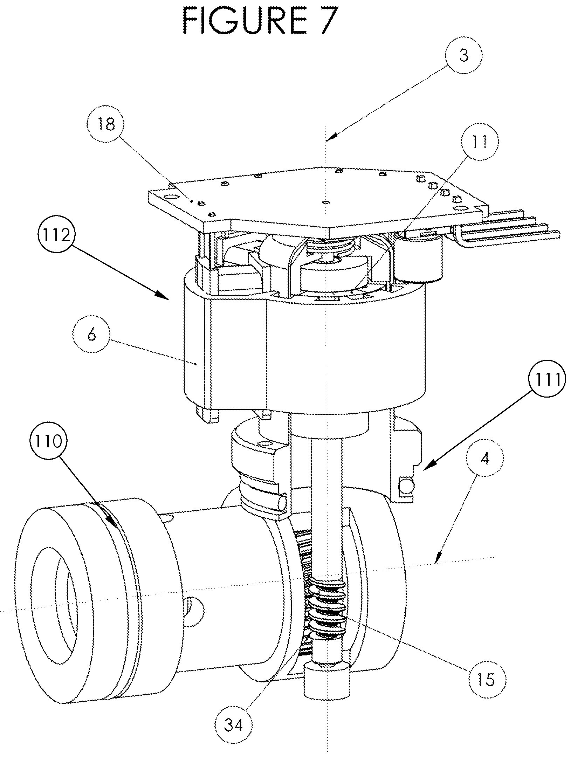

La figure 7 représente une vue isométrique de ce premier mode de réalisation où le corps de vanne a été caché, ce qui permet d'apprécier plus en détail la partie de réduction avec l'extrémité (15) filetée de l'arbre (12) liée au rotor (11) ainsi que la roue dentée (34) liée au pointeau (35). Cette figure illustre aussi les trois sous-ensembles assemblés au corps de vanne (non représenté). Un premier-sous ensemble (110) qui contient des éléments mobiles, incluant l'élément limitant le débit de fluide. Un second sous-ensemble (111) qui contient des éléments mobiles, incluant le rotor assemblé à la cloche d'étanchéité. Lesdits sous-ensembles (110, 111) présentent des formes cylindriques complémentaires aux deux usinages de révolution du corps de vanne permettant un assemblage simplifié et l'obtention d'une vanne étanche. De plus lesdits sous-ensembles (110, 111) peuvent être assemblés et testés indépendamment du corps de vanne, cette construction accélérant avantageusement les manipulations en environnement contrôlé en pollution. Un troisième sous-ensemble (112) contenant le stator (6), les éléments utiles au pilotage du stator, tels que les connectiques et la carte électronique (18), et le boitier ou surmoulage (non représenté), peut être assemblé à ladite vanne étanche en environnement non-contrôlé. Cet assemblage ne nécessite pas d'opération d'étanchéification supplémentaire couteuse.

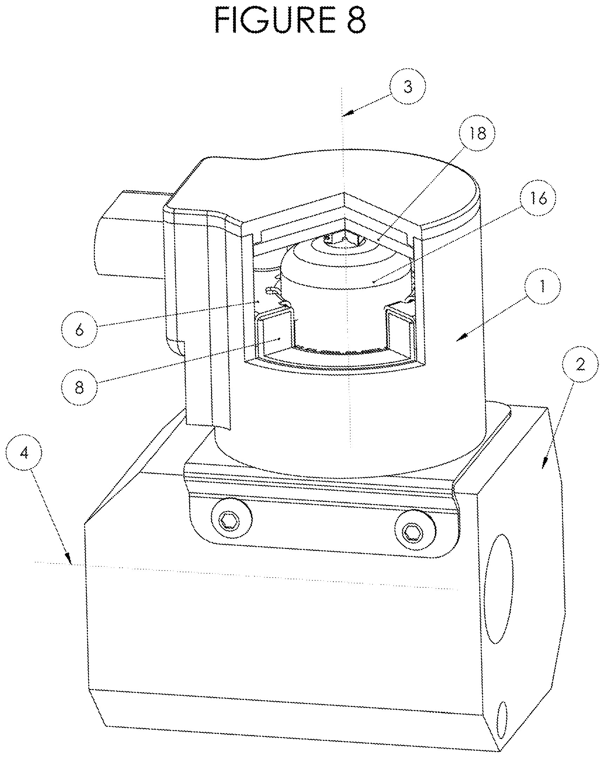

La figure 8 représente une deuxième variante où l'actionneur électrique est à flux axial caractérisé par une forme cylindrique, avec des bobines électriques (8) concentriques à l'axe de l'actionneur (3). Cette figure illustre la variabilité permise par l'invention dans l'utilisation de différentes topologies de moteur électrique sans limitation dans la forme ni le type. Les deux exemples donnés dans ce document ne sont donc en aucun cas limitatifs.

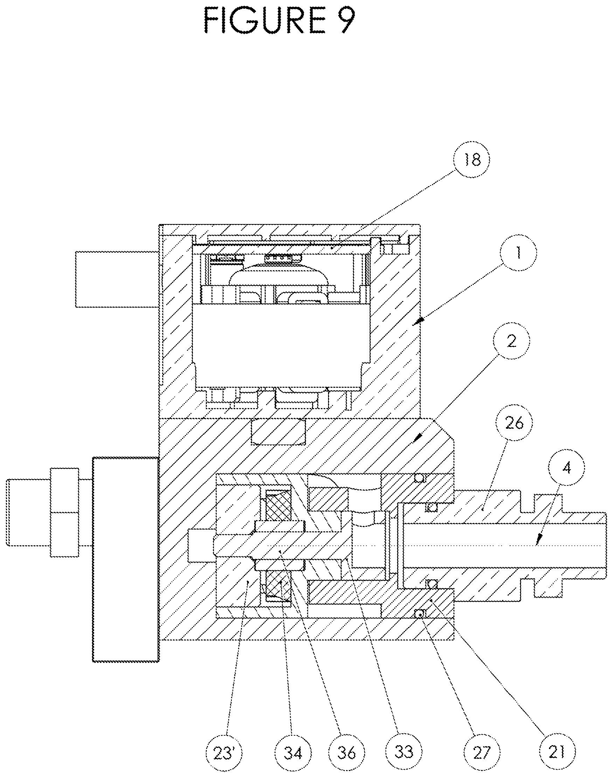

La figure 9 illustre une solution de réglage de débit de fluide par un boisseau rotatif (33), solidaire du moyeu (36). Le nombre de sorties n'est pas limité à une seule. En amont du moyeu (36) un simple guidage par un palier lisse (23'), en lieu et place du système vis-écrou décrit précédemment, est réalisé. En effet, une simple rotation du moyeu, sans translation, est nécessaire dans cet exemple. La pièce réalisant le siège (21) du boisseau rotatif (33) peut présenter un logement destiné à recevoir les éléments de connexion (26) du fluide caloporteur, minimisant ainsi le nombre d'usinages nécessaires dans le corps de vanne (2).

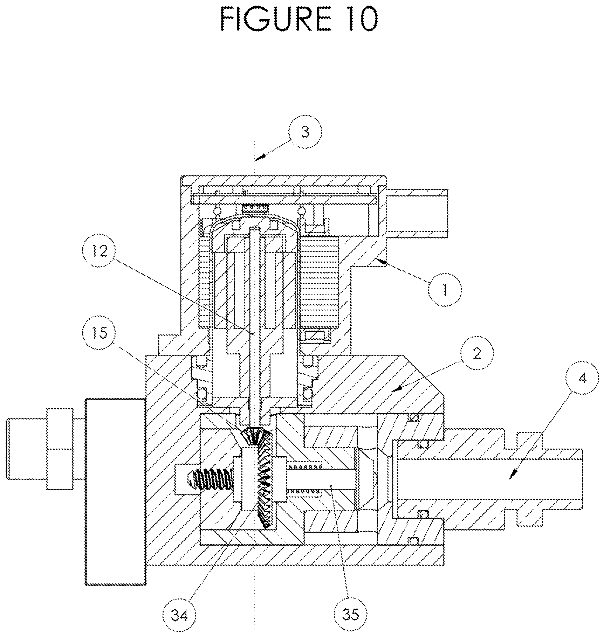

La figure 10 illustre une alternative de réduction par engrenages coniques. L'extrémité de l'arbre (15) présente une forme dentée et conique et engrène avec une roue dentée (34) conique dont l'axe de rotation est l'axe (4) du pointeau (35). Les axes peuvent être concourants ou pas.

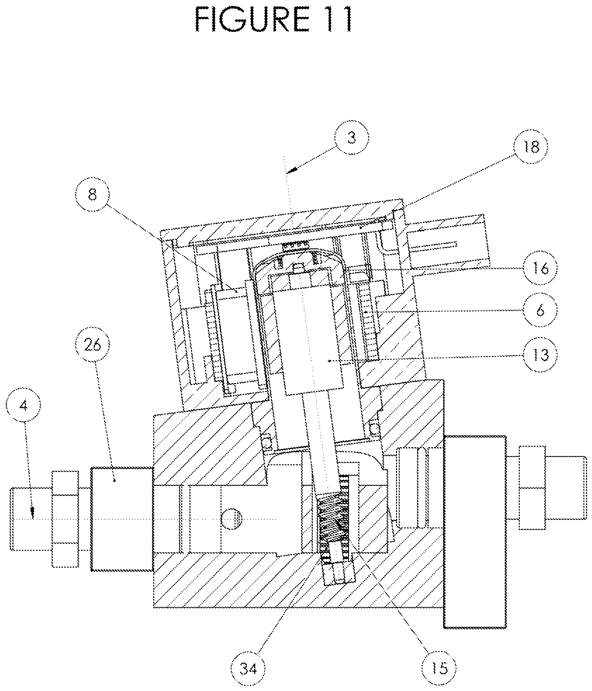

La figure 11 illustre une autre alternative de construction de l'engrenage où celui-ci est un engrenage de type vis sans fin et dont l'axe (3) de rotation du rotor (11) et l'axe (4) de déplacement du pointeau sont tels que les plans orthogonaux auxdits axes (3, 4) ne sont pas orthogonaux entre eux. Cette réalisation permet notamment d'adapter encombrement en regard du rapport de réduction tout en gardant les avantages décrits plus haut. L'avantage de cette réalisation est aussi de pouvoir réaliser une roue dentée (34) moulée car droite.

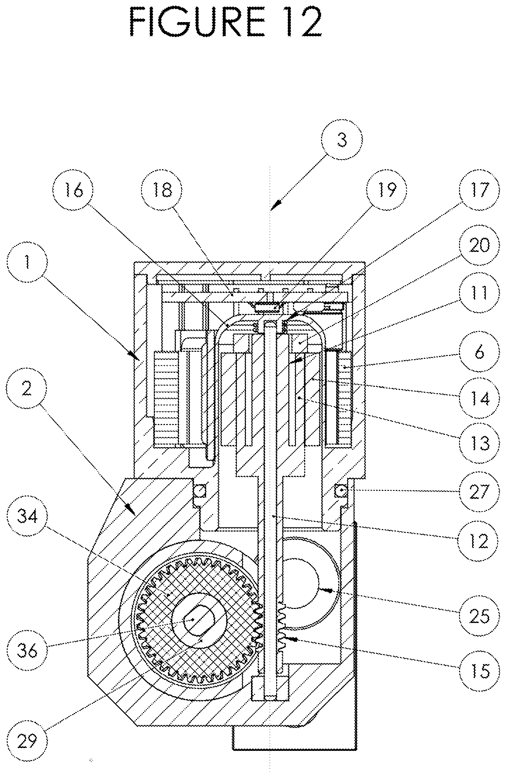

La figure 12 présente une version utilisant une cloche (16) qui est réalisée en matière plastique est qui est un prolongement du boitier de l'actionneur, c'est-à-dire la partie entourant le stator (6) et faisant l'interface avec l'extérieur. La matière plastique peut être une matière surmoulant par injection, le stator (6). Cette solution d'utiliser une cloche en matière plastique est néanmoins réservée pour les cas où la pression du fluide à réguler est moindre car la résistance à la pression est moins élevée que celle permise avec la cloche métallique illustrée sur les autres figures.

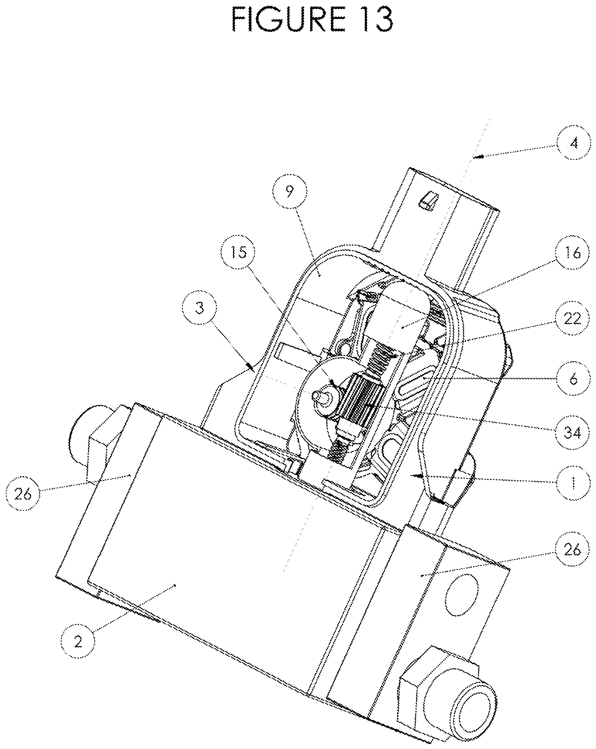

La figure 13 présente une alternative de réalisation utilisant un actionneur (1) de forme plate ou de cassette. Le stator (6) du moteur électrique est de forme plate installé sur le fond du boitier (9). Le rotor (non visible) est solidaire d'un arbre dont l'extrémité (15) forme, avec une roue dentée (34) guidée par une vis (22) en amont la prolongeant, une transformation de type vis-écrou. Le rotor et la roue dentée (34) sont à l'intérieur d'une cloche d'étanchéité (16) dont la forme est adaptée à cette transformation de type vis-écrou. La roue (34) est prolongée en aval par une vis qui entraine un organe de réglage (non visible) de manière similaire à ce que l'on peut voir en figure 7 par exemple.

Dans les tous les exemples présentés ici, le fluide peut traverser ou non la zone de réduction.

## Revendications

1. Vanne de réglage de circulation d'un fluide caloporteur présentant un corps de vanne (2) comprenant un organe mobile de réglage (35, 33), un actionneur électrique (1) comprenant un stator (6) et un rotor (11), une cloche d'étanchéité (16) s'étendant depuis le corps de vanne (2) jusqu'à l'intérieur dudit stator (6), ladite cloche d'étanchéité (16) étant positionnée à l'interface entre ledit rotor (11) et ledit stator (6) de manière à ce que ledit rotor (11) soit à l'intérieur de ladite cloche (16) et immergé dans ledit fluide, ledit stator (6) étant isolé dudit fluide, ledit rotor (11) tournant autour d'un premier axe (3) et étant solidaire d'un arbre (12) s'étendant le long dudit premier axe (3), ledit organe mobile de réglage (35, 33) se déplaçant linéairement sur un deuxième axe (4) ou en rotation autour dudit deuxième axe (4) ledit arbre (12) présentant une extrémité (15) formant, avec une roue dentée (34) entrainant ledit organe mobile de réglage (35, 33), un engrenage gauche ou concourant **caractérisée en ce que** ledit arbre (12) est guidé par uniquement deux paliers (101, 102) situés à ses extrémités.

2. Vanne de réglage de circulation d'un fluide selon la revendication 1 **caractérisée en ce que** ledit organe mobile de réglage est un pointeau (35) se déplaçant linéairement.

3. Vanne de réglage de circulation d'un fluide selon la revendication 2 **caractérisée en ce que** ledit deuxième axe (4) dudit pointeau (35) est orthogonal audit premier axe (3) dudit rotor (11) et **en ce que** ladite extrémité (15) est filetée et entraine une roue dentée (34) tournant autour dudit deuxième axe (4).

4. Vanne de réglage de circulation d'un fluide selon la revendication 2 **caractérisée en ce que** ladite extrémité (15) est dentée et entraîne ladite roue dentée (34) en formant un engrenage conique.

5. Vanne de réglage de circulation d'un fluide selon la revendication 3 **caractérisée en ce que** ladite roue dentée (34) entraine en rotation un moyeu (36), **en ce que** ledit moyeu (36) est solidaire d'une vis (22), **en ce qu'**un écrou fixe (23) est disposé en amont dudit moyeu (36) imposant un mouvement hélicoïdal audit moyeu (36) lors de la rotation de ladite roue dentée (34), et **en ce que** ledit moyeu (36) est en contact avec ledit pointeau (35).

6. Vanne de réglage de circulation d'un fluide selon la revendication précédente **caractérisée en ce que** ledit moyeu (36) présente une extrémité sphérique (28) appuyant sur ledit pointeau (35), et **en ce qu'**un ressort de compression (37) maintient un contact constant entre ledit pointeau (35) et ledit moyeu (36).

7. Vanne de réglage de circulation d'un fluide selon la revendication précédente **caractérisée en ce que** ledit contact est glissant, supprimant la composante de rotation dudit pointeau (35).

8. Vanne de réglage de circulation d'un fluide selon la revendication 1 **caractérisée en ce que** ledit deuxième axe (4) dudit organe mobile de réglage (33, 35) et ledit premier axe (3) de rotation du rotor (11) sont tels que les plans orthogonaux auxdits premiers et deuxième axes (3, 4) ne sont pas orthogonaux entre eux.

9. Vanne de réglage de circulation d'un fluide selon la revendication 1 **caractérisée en ce que** ledit organe mobile de réglage est sous la forme d'un boisseau (33) se déplaçant en rotation autour dudit deuxième axe (4).

10. Vanne de réglage selon la revendication 1 **caractérisée en ce qu'**elle présente un capteur de rotation dudit rotor (11) composé d'une sonde magnétosensible (19) solidaire d'un circuit imprimé (18) à l'extérieur de ladite cloche (16), ainsi que d'au moins un élément magnétique (20) solidaire dudit rotor (11) à l'intérieur de ladite cloche (16) et générant ledit champ magnétique.

11. Vanne de réglage selon la revendication 1 **caractérisée en ce qu'**elle présente un capteur de position linéaire du pointeau (35) composé d'une sonde magnétosensible (19), ainsi que d'au moins un élément magnétique (20) solidaire dudit organe mobile de réglage (34) et générant ledit champ magnétique.

12. Vanne de réglage selon la revendication 1 **caractérisée en ce que** ledit stator (6) dudit actionneur électrique (1) présente uniquement trois bobines regroupées dans un secteur angulaire inférieur à 180°.

13. Vanne de réglage de circulation d'un fluide selon la revendication 1 **caractérisée en ce que** ladite cloche (16) est une cloche métallique disposée dans l'actionneur électrique (1).

14. Vanne de réglage de circulation d'un fluide selon la revendication 1 **caractérisée en ce que** ladite cloche (16) est une paroi de matière plastique entourant le stator (6) de l'actionneur (1).

15. Vanne de réglage de circulation d'un fluide selon la revendication 1 **caractérisé en ce que** ledit corps de vanne (2) comporte deux cavités (120, 130) accueillant les éléments mobiles internes, lesdites deux cavités (120, 130) étant réalisées en deux usinages de révolution, l'un suivant l'axe (3) et l'autre suivant l'axe (4) et pouvant comporter des sections cylindriques de différents diamètres.

16. Vanne de réglage de circulation de fluide selon la revendication 1 **caractérisé en ce que** ledit stator (6) ainsi que la carte électronique (18) peuvent être assemblés au boitier (9), le tout pouvant être fixé sur le bloc de vanne (2) étanche une fois toutes les opérations en environnement contrôlé achevées.

17. Vanne de réglage de circulation de fluide selon la revendication 1 **caractérisé en ce que** la pièce réalisant le siège (21) du boisseau rotatif (33) ou du pointeau (35) présente un logement destiné à recevoir les éléments de connexion (26) du fluide caloporteur.

18. Application d'une vanne de réglage de circulation de fluide selon la revendication 1 pour le dosage de fluide d'un circuit de climatisation.

19. Application d'une vanne de réglage de circulation de fluide selon la revendication 1 pour le dosage d'un fluide de refroidissement d'une batterie.

## Patentansprüche

1. Regelventil für eine Zirkulation eines wärmeübertragenden Fluids, das einen Ventilkörper (2), umfassend ein bewegliches Stellglied (35, 33), einen elektrischen Aktuator (1), umfassend einen Stator (6) und einen Rotor (11), eine Dichtungsglocke (16), die sich von dem Ventilkörper (2) bis zu dem Inneren des Stators (6) erstreckt, aufweist, wobei die Dichtungsglocke (16) an der Schnittstelle zwischen dem Rotor (11) und dem Stator (6) positioniert ist, sodass der Rotor (11) im Inneren der Glocke (16) und in das Fluid eingetaucht ist, wobei der Stator (6) von dem Fluid isoliert ist, der Rotor (11) um eine erste Achse (3) rotiert und mit einer Welle (12) fest verbunden ist, die sich entlang der ersten Achse (3) erstreckt, wobei sich das bewegliche Stellglied (35, 33) auf einer zweiten Achse (4) linear bewegt oder sich um die zweite Achse (4) dreht, wobei die Welle (12) ein Ende (15) aufweist, das mit einem Zahnrad (34), das das bewegliche Stellglied (35, 33) antreibt, ein linksgängiges oder gleichlaufendes Getriebe ausbildet, **dadurch gekennzeichnet, dass die** Welle (12) nur durch zwei Lager (101, 102) geführt wird, die sich an ihren Enden befinden.

2. Regelventil für die Zirkulation eines Fluids nach Anspruch 1,
**dadurch gekennzeichnet, dass** das bewegliche Stellglied eine Düsennadel (35) ist, die sich linear bewegt.

3. Regelventil für die Zirkulation eines Fluids nach Anspruch 2,
**dadurch gekennzeichnet, dass** die zweite Achse (4) der Düsennadel (35) orthogonal zu der ersten Achse (3) des Rotors (11) ist, und dass das Ende (15) mit einem Gewinde versehen ist und ein Zahnrad (34) antreibt, das sich um die zweite Achse (4) dreht.

4. Regelventil für die Zirkulation eines Fluids nach Anspruch 2,
**dadurch gekennzeichnet, dass** das Ende (15) gezahnt ist und das Zahnrad (34) antreibt, wobei ein Kegelrad ausgebildet ist.

5. Regelventil für die Zirkulation eines Fluids nach Anspruch 3,
**dadurch gekennzeichnet, dass** das Zahnrad (34) eine Drehung einer Nabe (36) antreibt, dass die Nabe (36) mit einer Schraube (22) fest verbunden ist, dass eine feste Mutter (23) stromaufwärts der Nabe (36) angeordnet ist, die der Nabe (36) eine schraubenförmige Bewegung bei der Drehung des Zahnrads (34) auferlegt, dass die Nabe (36) mit der Düsennadel (35) in Kontakt steht.

6. Regelventil für die Zirkulation eines Fluids nach dem vorstehenden Anspruch, **dadurch gekennzeichnet, dass** die Nabe (36) ein kugelförmiges Ende (28) aufweist, das auf die Düsennadel (35) drückt, und dass eine Druckfeder (37) einen konstanten Kontakt zwischen der Düsennadel (35) und der Nabe (36) aufrechterhält.

7. Regelventil für die Zirkulation eines Fluids nach dem vorstehenden Anspruch, **dadurch gekennzeichnet, dass** der Kontakt gleitend ist, wobei die Rotationskomponente der Düsennadel (35) unterdrückt wird.

8. Regelventil für die Zirkulation eines Fluids nach Anspruch 1,
**dadurch gekennzeichnet, dass** die zweite Achse (4) des beweglichen Stellglieds (33, 35) und die erste Drehachse (3) des Rotors (11) derart sind, dass die Ebenen, die orthogonal zu der ersten und der zweiten Achse (3, 4) sind, nicht orthogonal zueinander sind.

9. Regelventil für die Zirkulation eines Fluids nach Anspruch 1,
**dadurch gekennzeichnet, dass** das bewegliche Stellglied die Form eines Gasschiebers (33), der sich rotierend um die zweite Achse (4) bewegt, vorliegt.

10. Regelventil nach Anspruch 1, **dadurch gekennzeichnet, dass** es einen Rotationssensor des Rotors (11), der aus einer magnetisch beeinflussbaren Sonde (19) hergestellt ist, die mit einer gedruckten Schaltung (18) außerhalb der Glocke (16) fest verbunden ist, sowie mindestens ein Magnetelement (20), das mit dem Rotor (11) im Inneren der Glocke (16) fest verbunden ist und das Magnetfeld erzeugt, aufweist.

11. Regelventil nach Anspruch 1, **dadurch gekennzeichnet, dass** es einen linearen Positionssensor der Düsennadel (35), der aus einer magnetisch beeinflussbaren Sonde (19) hergestellt ist, sowie mindestens ein Magnetelement (20), das mit dem beweglichen Stellglied (34) fest verbunden ist und das Magnetfeld erzeugt, aufweist.

12. Regelventil nach Anspruch 1, **dadurch gekennzeichnet, dass** der Stator (6) des elektrischen Aktuators (1) nur drei Spulen, die in einem Winkelsektor von weniger als 180° umgruppiert sind, aufweist.

13. Regelventil für die Zirkulation eines Fluids nach Anspruch 1,
**dadurch gekennzeichnet, dass** die Glocke (16) eine Metallglocke ist, die in dem elektrischen Aktuator (1) angeordnet ist.

14. Regelventil für die Zirkulation eines Fluids nach Anspruch 1,
**dadurch gekennzeichnet, dass** die Glocke (16) eine Wand aus Kunststoff ist, die den Stator (6) des Aktuators (1) umgibt.

15. Regelventil für die Zirkulation eines Fluids nach Anspruch 1,
**dadurch gekennzeichnet, dass** der Ventilkörper (2) zwei Hohlräume (120, 130) vorweist, die die inneren beweglichen Elemente aufnehmen, wobei die zwei Hohlräume (120, 130) in zwei Umdrehungsbearbeitungen hergestellt werden, die eine entlang der Achse (3) und die andere entlang der Achse (4), und die zylindrische Abschnitte mit unterschiedlichen Durchmessern vorweisen können.

16. Regelventil für die Zirkulation eines Fluids nach Anspruch 1,
**dadurch gekennzeichnet, dass** der Stator (6) sowie die elektronische Platine (18) mit dem Gehäuse (9) zusammengebaut werden können, wobei das Ganze an dem dichten Ventilblock (2) befestigt werden kann, sobald sämtliche der Vorgänge in kontrollierter Umgebung abgeschlossen sind.

17. Regelventil für die Zirkulation eines Fluids nach Anspruch 1,
**dadurch gekennzeichnet, dass** das den Sitz (21) des Drehschiebers (33) oder der Düsennadel (35) ausführende Teil eine Aufnahme, die zum Aufnehmen der Anschlusselemente (26) für das Wärmeträgerfluid bestimmt ist, aufweist.

18. Anwendung eines Regelventils für die Zirkulation eines Fluids nach Anspruch 1 für die Dosierung von Fluid in einem Klimatisierungskreislauf.

19. Anwendung eines Regelventils für die Zirkulation eines Fluids nach Anspruch 1 für die Dosierung eines Fluids für die Kühlung einer Batterie.

## Claims

1. Valve for controlling the circulation of a heat transport fluid, having a valve body (2) comprising a movable control member (35, 33), an electrical actuator (1) comprising a stator (6) and a rotor (11), a sealing cover (16) extending from the valve body (2) to the inside of said stator (6), said sealing cover (16) being positioned at the interface between said rotor (11) and said stator (6) in such a way that said rotor (11) is inside said cover (16) and submerged in said fluid, said stator (6) being isolated from said fluid, said rotor (11) rotating about a first axis (3) and being secured to a shaft (12) extending along said first axis (3), said movable control member (35, 33) moving in a linear manner along a second axis (4) or rotating about said second axis (4), said shaft (12) having an end (15) forming, with a toothed wheel (34) driving said movable control member (35, 33), a gear pair with non-intersecting or intersecting axes, **characterized in that** said shaft (12) is guided by only two bearings (101, 102) positioned at its ends.

2. Fluid circulation control valve according to claim 1, **characterized in that** said movable control member is a needle (35) that moves in a linear manner.

3. Fluid circulation control valve according to claim 2, **characterized in that** said second axis (4) of said needle (35) is orthogonal to said first axis (3) of said rotor (11) and **in that** said end (15) is threaded and drives a toothed wheel (34) rotating about said second axis (4).

4. Fluid circulation control valve according to claim 2, **characterized in that** said end (15) is toothed and drives said toothed wheel (34), thereby forming a bevel gear pair.

5. Fluid circulation control valve according to claim 3, **characterized in that** said toothed wheel (34) rotates a hub (36), **in that** said hub (36) is secured to a screw (22), **in that** a stationary nut (23) is arranged upstream of said hub (36), forcing said hub (36) to move helically while said toothed wheel (34) is rotating, and **in that** said hub (36) is in contact with said needle (35).

6. Fluid circulation control valve according to the preceding claim, **characterized in that** said hub (36) has a spherical end (28) that bears against said needle (35), and **in that** a compression spring (37) maintains constant contact between said needle (35) and said hub (36).

7. Fluid circulation control valve according to the preceding claim, **characterized in that** said contact is sliding, eliminating the rotational component of said needle (35).

8. Fluid circulation control valve according to claim 1, **characterized in that** said second axis (4) of said movable control member (33, 35) and said first rotational axis (3) of the rotor (11) are such that the planes orthogonal to said first and second axes (3, 4) are not mutually orthogonal.

9. Fluid circulation control valve according to claim 1, **characterized in that** said movable control member is in the form of a plug (33) that rotates about said second axis (4).

10. Control valve according to claim 1, **characterized in that** it has a rotation sensor for said rotor (11), which sensor consists of a magnetosensitive probe (19) that is secured to a printed circuit (18) outside said cover (16) and of at least one magnetic element (20) that is secured to said rotor (11) inside said cover (16) and generates said magnetic field.

11. Control valve according to claim 1, **characterized in that** it has a linear position sensor for the needle (35), which sensor consists of a magnetosensitive probe (19) and of at least one magnetic element (20) that is secured to said movable control member (34) and generates said magnetic field.

12. Control valve according to claim 1, **characterized in that** said stator (6) of said electrical actuator (1) has only three coils grouped together in an angular sector of less than 180°.

13. Fluid circulation control valve according to claim 1, **characterized in that** said cover (16) is a metal cover arranged in the electrical actuator (1).

14. Fluid circulation control valve according to claim 1, **characterized in that** said cover (16) is a plastics wall surrounding the stator (6) of the actuator (1).

15. Fluid circulation control valve according to claim 1, **characterized in that** said valve body (2) comprises two cavities (120, 130) that accommodate the internal movable elements, said two cavities (120, 130) being produced in two rotational machining processes, one along the axis (3) and the other along the axis (4), it being possible for said cavities to comprise cylindrical cross sections of different diameters.

16. Fluid circulation control valve according to claim 1, **characterized in that** said stator (6) and the electronics board (18) can be attached to the casing (9), the whole of which can be fixed to the sealed valve block (2) once all operations in a controlled environment have been completed.

17. Fluid circulation control valve according to claim 1, **characterized in that** the part forming the seat (21) of the rotary plug (33) or of the needle (35) has a housing intended to receive the connection elements (26) of the heat transport fluid.

18. Use of a fluid circulation control valve according to claim 1 for metering fluid in an air-conditioning circuit.

19. Use of a fluid circulation control valve according to claim 1 for metering fluid for cooling a battery.
